# EUROPEAN PATENT APPLICATION

(11) **EP 3 264 399 A1**
(43) Date of publication of application: **03.01.2018**
(21) Application number: 15883498.6
(22) Date of filing: 17.07.2015
(51) Int. Cl.: G09F 3/00, G06K 19/07, B31D 1/02

(54) **SMART LABEL SYSTEM**

(30) Priority: 24.02.2015 MX 2015002394
(71) Applicant: Validation Security Technology Identification S De RL De CV, Distrito Federal 11650 (MX)
(72) Inventor: ROMERO GARCÍA, Marco Venicio, Distrito Federal 07780 (MX)
(74) Representative: Temiño Ceniceros, Ignacio
(86) International application number: PCT/MX2015/000105
(87) International publication number: WO 2016/137312

(57) **Abstract**

The invention relates to the label production industry, more specifically to the production of labels with increased performance for improving and amplifying the function of a label. Even more specifically, the invention relates to a system that allows the handling of said label. Said smart label system is characterised in that it is formed by a smart label comprising a) a transparent or translucent film with a print on one of the faces thereof; a film of varnish on said print or on the opposite face, depending on whether the print is on the inside or on the outside, and on said varnish, there is another, different print in a special ink that becomes visible in the event of an attempt to remove the label from the item to which it is stuck, and on this print there is a layer of pressure-sensitive adhesive; b) a chip with an antenna between the varnish and the adhesive; c) and electronic mobile device for communicating with the chip; and ch) an algorithm on the chip and on the electronic mobile device for unique encoded reading (padlock) encryption.

## Description

### FIELD OF THE INVENTION

The present invention relates to the label production industry, more specifically to the production of labels with increased performance for improving and simplifying the function of a label. Even more specifically, with a system that allows the handling of this label.

### BACKGROUND OF THE INVENTION

Since emerged the need for the products to have information about themselves and with respect to the different agents involved in their production, storage, distribution and sale, the intervention of the labels was required.

Technologically, labels have evolved in many ways. From the support where the information was reflected, which is the one that has developed the most, the adhesive with which the label was fixed to the product and the effects of the characters and images of the content reflected.

With regard to information support, there have been many materials that were solving different situations of the labels, almost indestructible labels, easily destroyed labels, which showed that they had tried to open a container, labels that when they underwent a stretch, by trying to open the container, which was sealing, the labels changed color or displayed some text, etc.

There have also been many compositions and support structures, such as security paper to be sure if a label is original or is a copy of some pirate company.

Regarding the adhesive with which the labels are affixed to the article or packaging, there have also been many developments mainly motivated by the material in which the label would be fixed but also motivated by the expected behavior of said adhesive and the way would apply.

Now, regarding to the effects that the information and images captured, there have also been developments related to printing, but also with more specific issues and different technologies.

The printed label by Inkjet or xerographic technology, raise their own ink composition problems to prevent run-in during and after drying and the aspects of formation of characters and images. The separation of colors for the printing of labels with all the range of colors perceivable by the human eye, was also a technology that impacted the production of labels.

The technology to print a substrate with a third-dimensional feel in impressions in general and on labels in particular was another technology not yet mature. This technology consists of the printing of images on a support, which is covered with a sheet formed by a series of lenses consisting of halves of cylinders cut longitudinally and placed one adjacent to its neighbor, to form said sheet.

More recently, with the emergence of integrated circuit technology, solid memory and different information transfer protocols, so-called smart cards have emerged, consisting of a chip with certain characteristics that depend on the quality intended to be provided to the label.

These smart cards have the quality of allowing, through a given protocol to communicate with any reading device. Some very complicated chips can store a lot of information, however they are relatively expensive.

Some also require a power source, such as a battery, to be able to transmit the information they contain and that a distant or nearby device receives this transmission.

The generic name of these chips are RFID devices. There are several types of these devices, some of them being high frequency and others with low frequency. Also some are specialized to be read in distances smaller than 40 cm and others to be read at distances within the range of meters. Each of these devices has a specific structure to meet the requirements that are required.

U.S. Patent 5,262,216 to Popat, et al discloses a pressure sensitive label assembly which includes labels mounted on a backing sheet with the labels comprising a pressure sensitive adhesive which is comprised of a percentage between 45 and 85 by weight of a copolymer of propylene or ethylene with an aliphatic hydrocarbon of open chain configuration having from 5 to 7, preferably 6, carbon atoms. The copolymer is preferably amorphous propylene-hexane. The pressure sensitive adhesive also includes liquid and solid adhesion agents, and may also include U. V stabilizers and anti-oxidant material.

This label structure does not allow a reliable determination of whether or not it has been tried to take off the tag. Nor does it allow to have a traceability of the product in which it is located.

In US patent application 2004/0035526, a fabric label is disclosed. A method of producing the same, a method of marking a garment and a tool for inserting a marker. The label has preferably a closed or near-closed pouch, within which a marker, such as an electronic surveillance article (ASE) or radio frequency identification (RFID) device is inserted after the pouch has been formed. In one modality, the marker is inserted through a slot in the bag and in another the marker is inserted into a bag closed by a hollow needle which penetrates through a bag wall. This structure of label do not allow fix it to a products other than fabric or fabric.

In US patent application 2008/0150725, a mass-produced electronic label and structure is disclosed which has improved the range and directionality of communication. In its pattern, a wave director and a reflector having a flat structure with the approximate shape of a letter L and formed in the same flat pattern is adhered to an adhesive surface of a label seal in a symmetrical manner through a Entry point 1 between the adhesive surface of the tag seal so that the wave director and the reflector are configured in an extreme proximity and along the periphery of the tag seal. Because of this, it is possible to improve the mass productivity of the electronic tag without contact and efficiently receives radiated radio waves from the antenna of a reader which reduces the circular polarization loss. This label has the deficiency of not allowing to see when it was partially or totally eliminated, it does not divulge the communication protocol for its use.

In the application US 2008/0206505 disclosing a polymeric film for the labeling articles comprising a central layer (A), a printing printing layer (B) comprising a polypropylene homopolymer, a polypropylene copolymer, a High density polyethylene, or a blend of any of these and less than 10% by weight based on the weight of the layer (8) of a polyester elastomer, an unsaturated alkene carboxylic acid or a derivative acid copolymer, and a thin layer C) Adhesive comprising a polypropylene homo-polymer, wherein the polymer film is oriented. A label containing adhesive and a punch of adhesive labels from the labels containing the adhesive and including a polymer film which is especially useful for pressure sensitive hot melt adhesive applications. This type of label also fails to satisfy the need to show that a label was dismissed in whole or in part and also does not allow the traceability of the product it contains.

US application 2010/0253523 discloses an RFI D tag consisting of at least: a functional layer comprising at least one electronic component, an antenna connected to the electronic component; A top layer; A lower layer having an adhesive surface; Wherein the lower and upper layers consist of one or more materials capable of resisting U V and / or filter radiation to this radiation. The invention also includes the method for manufacturing the RFID tag and the machine which applies this method of manufacture. This label is effectively traceable, but it does not make it possible to discern whether a label was totally or partially detached, and depending on the placement position, does not allow to know if a package was tried to open. It also does not divulge anything about security in RFID label management.

The analysis of these documents of the prior art, allows to visualize that a label that fills the gaps left by these already known structures, gain a competitive advantage and the company that owns this technology would have a major advantage with respect to its competitors.

In none of these documents is even glimpsed the problem of in addition to having an electronic label, have at the same time a label structure that would indicate that the label was removed from an article, totally or partially.

### OBJECTIVES OF THE INVENTION

One of the objective of the present invention is to achieve a label structure which allows to detect label manipulation to partially or totally open it.

Another objective is to achieve a label, which in addition to achieving the detection of manipulation, allow a traceability of the article in which the label is found.

Still another objective, is to have a smart label whose reading is assured so that only the authorized person can obtain information from this label.

Still another objective, is to reduce the losses of items in storage warehouse and during transportation.

Another objective is to achieve the combination of different elements for the management of a label with the characteristics stated in the previous objectives.

And all those advantages and objectives which will become a patent from the reading of the present description accompanied by the figures which, as an integral part thereof are annexed, for illustrative purposes but not limitative, to the present description.

### BRIEF DESCRIPTION OF THE DRAWINGS

Figure 1 Illustrates the label that when partially detached, shows that this manipulation was carried out.
Figure 2 illustrates the different elements of the system permitting the handling of the tag of the present invention.

### DETAILED DESCRIPTION OF THE INVENTION

The present invention relates to a smart label system which achieves the objectives that the prior art has not achieved. Having shown the advantages of the present invention and the problems it solves, will be understandable its conceptualization, but to date it has not even been glimpsed in the prior art, with results, never imagined by the inventors.

The elements that make up the system are four: a smart tag with ability to show tampering, a communication algorithm between the tag and a smart device, such as a Smartphone, a Tablet or other device that allows the communication protocol and the ability to display the information received. It is required in addition to this communication protocol and a device, a cloud which containing a database with the information related to the information read on the label.

For information security in the cloud and in the mobile smart device, this information is encrypted, and only have sense with the algorithm located in the smart mobile saying.

The structure of the smart label capable of displaying an improper handling comprises a transparent or translucent film with a print on one of its sides. On this print there is a varnish layer and on this varnish has another different print with a special ink, which will become visible when trying to take off the label of the article in which it is attached. Finally, a layer of pressure sensitive adhesive is provided on this impression. This adhesive, is a high adhesion polymer based adhesive, sensitive to removable pressure.

The transparent or translucent layer with a printed on one of its faces is a high density polyethylene layer.

The chemical compositions of the different components are an industrial secret, but they are such as to allow to take off the transparent or translucent layer and leave in the article the layer of the adhesive, with a visible legend that says the label has been improperly manipulate.

Some modalities have to do with the colors of the legend that will appear in the article, or in the disposition of this legend. It is also possible to have a UV radiation filter in the printed layer, or the adhesive itself will comprise an absorbent of this radiation.

In the beginning, this label will be attached to a layer, called transfert, which will easily allow it to be peeled off to adhere to the article to be labeled. This transfert is a glazed paper, siliconized and super-calendered.

Between this support layer and the adhesive layer, a chip is located that will have the character string that makes it unique and hence the article in which the label will be fixed. There is also, as a preferred modality, an antenna connected to the chip, which has no dependence on WiFi.

In addition to the proprietary data, the chip will have an algorithm for single coded reading encryption (padlock) and decoder communication APP.

The Hot Melt adhesive is of high anchorage, ultra-sensitive with polymer base, resistant to chemical transgressors.

An example of a label with the possibility of indicating whether it has been fraudulently manipulated or not, is the one that exists in the market with the Label Look ™ brand in its dual Layer version.

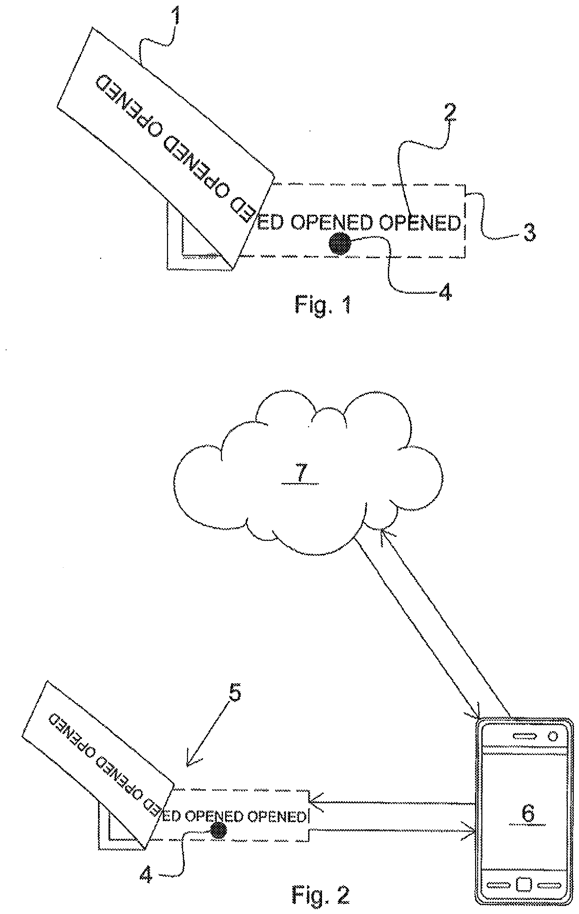

Figure 1 illustrates the label which, when is partially detached, shows that this manipulation was carried out. In this figure the numeral 1 indicates the layer transparent or translucent with a printed on its upper face. The numeral 2 indicates the legend that becomes visible when partially or totally detaching the transparent or translucent film. The adhesive with stronger adhesion to its surface of the article than to the surface with which it is in contact with the transparent or translucent layer is indicated by the numeral 3, numeral 4 points to the chip, it is located between the translucent layer 1 and the adhesive 3, but may be in any required zone.

Figure 2 illustrates the different elements of the system permitting the handling of the label of the present invention. The number 4 shows the chip, number 5 points out to the tag with the characteristic of making truculent manipulation thereof apparent, number 6 indicates the mobile device with the application for reading the contents of the chip of the tag and the algorithm for decrypting the information on the label and the one that is related to this information in the cloud 7.

Depending on its use, the label can be reused by "rewriting" the chip or relating the information contained therein, with other information contained in the "cloud".

The invention has been sufficiently described so that a person of ordinary skill in the art can reproduce and obtain the results mentioned in the present invention. However, any skilled person in the field of the art of the present invention may be able to make modifications not described in the present application. However, if for the application of these modifications in a particular product or in the process of manufacture of the same, the matter claimed in the following claims is required, such structures should be understood within the scope of the invention.

## Claims

1. A smart tag system **characterized by** being formed by an intelligent label comprising a) a film transparent or translucent with a printed on one of its faces; A varnish film on this print or on the opposite side, depending on whether the print is inside or outside, and on this varnish is another different print with a special ink that will be visible when attempting to peel off the label from the The article in which it is adhered and on this impression there is a layer of pressure sensitive adhesive; B} a chip with antenna between the varnish and the adhesive; E) a mobile electronic device for communicating with e! chip; Eh) an algorithm on the chip and on the mobile electronic device for unique coded reading encryption (padlock), d) a decoding communication APP for reading the chip and downloading related information from the cloud, and e) a movie, called transfert, in That the label is gently adhered and that it can easily be peeled off to adhere it to the article to be labeled.

2. The smart tag system as claimed in the preceding claim, further **characterized in that** the transparent film or translucent with a printed on one of its faces is a high density polyethylene film.

3. Intelligent etching system as claimed in claim 1, further **characterized in that** the pressure-sensitive adhesive is a Hot Melt adhesive of high anchorage, ultra Sensitive polymer-based, resistant to chemical transgressors.

4. Intelligent label system, as claimed in 1, further **characterized in that** the Transfert is a siliconized and super calendared glazed paper.
